# FASCICULE DE BREVET EUROPEEN

(11) **EP 0 441 078 B1**
(45) Date de publication et mention de la délivrance du brevet: **07.07.1993**
(21) Numéro de dépôt: 90403623.3
(22) Date de dépôt: 17.12.1990
(51) Int. Cl.: B60N 2/08

(54) **Verrou manuel de glissière de siège comportant un rattrapage de jeu horizontal**
Handbediente Verriegelungsvorrichtung einer Sitzschiene, mit einer Einrichtung zum Ausgleichen des horizontalen Spiels
Manually operable locking device for a seat slide, with compensation for horizontal play

(30) Priorité: 22.12.1989 FR 8917114
(43) Date de publication de la demande: 14.08.1991
(73) Titulaire: BERTRAND FAURE AUTOMOBILE, F-78391 Bois d'Arcy Cédex (FR)
(72) Inventeur: Hallet, Michel, F-14320 Clinchamps/Orne (FR)
(74) Mandataire: Madeuf, Claude Alexandre Jean

(56) Documents cités:
- EP-A- 0 098 702
- FR-A- 2 562 004
- FR-A- 2 629 400
- US-A- 4 210 303

## Description

La présente invention a pour objet un verrou de glissière de siège comportant un rattrapage du jeu longitudinal de façon à assurer un blocage du profilé supérieur de la glissière par rapport au profilé inférieur fixe.

En effet, malgré une fabrication soignée la denture de la crémaillère portée par l'une des ailes du profilé inférieur fixe qui coopère avec les dents du peigne porté par le verrou latéral monté pivotant sur l'une des ailes du profilé supérieur coulissant de la glissière ne concorde pas toujours exactement d'où un léger jeu longitudinal qui est désagréable pour la personne assise sur le siège qui a la sensation que ce siège n'est pas verrouillé complètement provoquant ainsi chez le passager une certaine appréhension, surtout au moment d'un freinage brusque, d'une accélération brutale, qui donne à chaque fois un léger mouvement de va-et-vient au siège.

On a déjà tenté de remédier à ce défaut, mais les solutions apportées n'ont pas donné satisfaction, car elles ne permettent pas un rattrapage correct et définitif du jeu longitudinal ou sont des solutions compliquées beaucoup trop onéreuses et donc ne peuvent pas être admises par les constructeurs (voir en particulier le FR-A-2 562 004).

La présente invention remédie à ces inconvénients en donnant une solution simple, peu coûteuse et élégante assurant un rattrapage complet du jeu longitudinal, sans augmenter le prix de fabrication.

Conformément à l'invention, le verrou manuel de glissière de siège à rattrapage de jeu horizontal coopérant avec l'une des ailes verticales du profilé mobile supérieur d'une glissière munie d'une crémaillère pour la mise en action du verrou de blocage présentant des dents d'un peigne qui ont une section carrée pour coopérer avec le profil arrondi du fond de la denture de la crémaillère, est caractérisé en ce que :
a) une découpe circulaire formée par un embouti solidaire de la face latérale d'un verrou sert d'axe de rotation à ce verrou en passant à travers un trou ovalisé réalisé sur l'une des ailes verticales du profilé supérieur mobile, ce verrou étant guidé à l'avant par un crevé de l'aile de ce même profilé supérieur et présentant à sa partie supérieure une aile triangulaire horizontale percée d'un trou recevant l'une des extrémités d'un ressort-lame travaillant en flexion tandis que l'autre extrémité repose dans un crevé de la partie arrière de l'aile du profilé mobile afin que le peigne du verrou pénètre dans une crémaillère portée par l'une des ailes du profile fixe de la glissière, le blocage du peigne dans la crémaillère étant assuré par le basculement du verrou autour de la découpe logée dans le trou ovalisé sous l'action du ressort-lame,
b) le ressort-lame exerce par son extrémité libre ou pointe un couple de rotation sur le verrou en s'arc-boutant dans le trou réalisé dans l'aile de ce verrou de manière que la découpe circulaire coopère avec les points du trou ovalisé, l'autre extrémité du ressort-lame prenant appui dans le crevé arrière réalisé sur la face latérale du profil supérieur.

Diverses autres caractéristiques de l'invention ressortent d'ailleurs de la description détaillée qui suit.

Une forme de réalisation de l'objet de l'invention est représentée, à titre d'exemple, au dessin annexé.

La fig. 1 est une élévation latérale, partie en coupe et arrachée, d'une glissière comportant un verrou à commande manuelle avec rattrapage de jeu longitudinal conforme à l'invention.

La fig. 2 est un plan correspondant à la fig. 1 sensiblement suivant la ligne II II de la fig. 1.

La fig. 3 est une coupe prise sensiblement suivant la ligne III III de la fig. 1.

La fig. 4 est une vue, à très grande échelle, d'une partie d'articulation du verrou manuel de la glissière.

La fig. 5 est une coupe partielle, à grande échelle, montrant une dent de la denture de la crémaillère portée par l'une des ailes du profile inférieur fixe dans laquelle est engagée une dent du peigne du verrou.

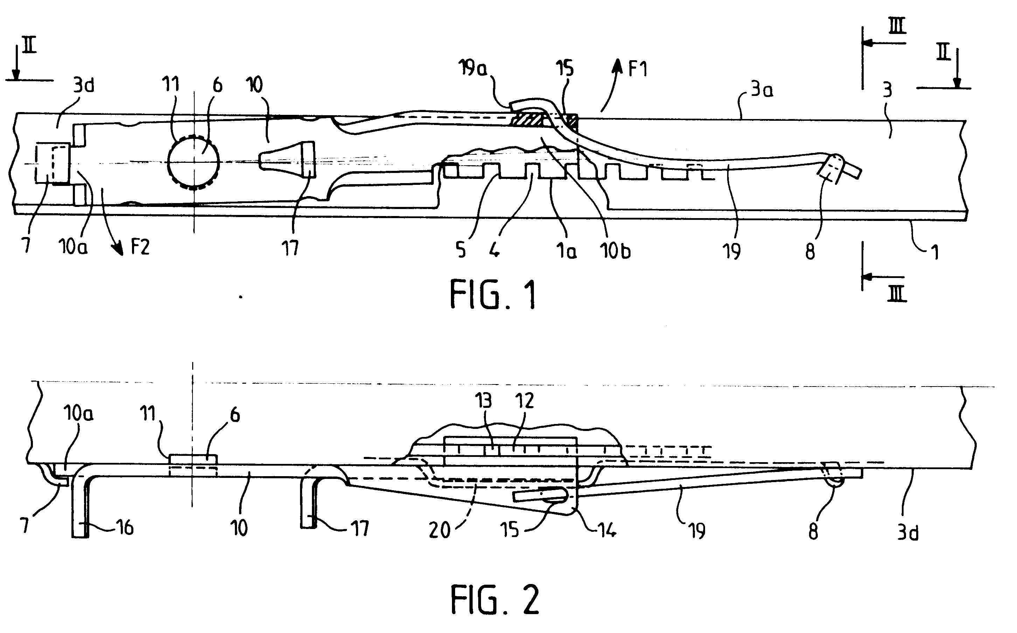

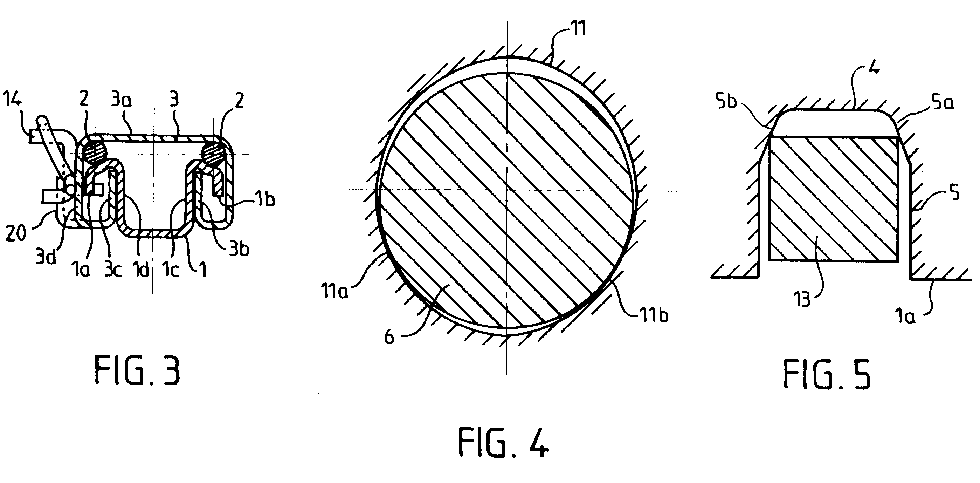

Aux fig. 1 à 3 la glissière représentée comporte un profilé inférieur 1 à section en U (voir fig. 3) dont les ailes 1a et 1b sont rabattues et conformées pour constituer un chemin de roulement pour les billes 2 interposées entre le profile inférieur 1 et le profilé supérieur mobile 3 dont la face supérieure 3a est reliée par tous moyens appropriés à la base de l'armature du siège considéré. De plus, l'aile extérieure 1a du profilé 1 présente une crémaillère 4 à denture sensiblement rectangulaire 5 et dont les côtés supérieurs sont inclinés en 5a, 5b (voir fig. 5).

Comme on peut s'en rendre compte à la fig. 3, les ailes 3b, 3c du profilé supérieur mobile 3 sont recourbées sur elles-mêmes pour constituer des guides coulissant le long des ailes verticales 1c, 1d du profilé inférieur 1 en renforçant ainsi la rigidité de la glissière 1.

La face verticale avant d'un verrou 10 porte une découpe circulaire 6 (voir fig. 1, 2 et 4). Ce verrou est guidé à l'avant par un crevé 7 réalisé sur l'aile verticale 3d du profilé supérieur 3.

De plus, il est rappelé normalement en position de verrouillage de la glissière par un ressort-lame 19 dont une des extrémités est fixée dans un crevé 8 réalisé dans la même aile verticale 3d du profilé 3.

Le verrou 10, permettant de relier et de bloquer le profilé coulissant supérieur 3 par rapport au profilé 1, est monté pivotant par la découpe circulaire 6 logée dans un trou ovalisé 11 percé dans l'aile 3d du profilé 3 (voir fig. 1, 2 et 4) tandis que l'extrémité 10a du verrou 10 est maintenue et guidée par le crevé 7. Le verrou 10, d'une conception classique, présente d'abord un peigne 12, c'est-à-dire une partie horizontale percée de trous équidistants délimitant ainsi des dents 13 (voir fig. 2 et 5) qui viennent pénétrer normalement dans la denture 5 de la crémaillère 4 portée par l'aile 1a du profilé fixe 1.

De plus, le verrou 10 porte à sa partie supérieure une aile horizontale 14 en forme de triangle dont la partie large est percée d'un trou 15, tandis que sont découpés dans la partie avant du verrou 10 deux pattes 16, 17 destinées à fixer la commande de la glissière. En général cette commande est un arceau classique qui se trouve placé à la partie inférieure de l'assise du siège.

La partie arrière 10b verticale du verrou 10 repose, lorsqu'elle est relevée pour libérer le peigne 10 de la crémaillère 4, dans un embouti découpé 20 (voir fig. 2 et 3) solidaire de l'aile 3a du profilé 3.

Il y a lieu en effet d'attirer l'attention sur le fait que normalement chaque siège comporte, sur ses parties droite et gauche inférieures, deux glissières parallèlement identiques comme cela vient d'être décrit; l'armature de l'assise du siège étant fixée par ses parties inférieures sur les deux profilés supérieurs 3 des deux glissières parallèles.

Une lame-ressort 19, de forme arquée, d'une part, repose dans le crevé arrière 8 et, d'autre part, passe à travers le trou 15 de l'aile triangulaire horizontale 14 du verrou 10 de façon que la pointe 19a de cette lame-ressort vient s'arc-bouter dans le trou 15 réalisé dans l'aile 14 du verrou 10.

Ainsi, lorsque le verrou occupe la position représentée à la fig. 1, la lame-ressort soulève l'extrémité arrière du verrou 10 dans le sens de la flèche F1 (voir fig. 1), ce qui a pour effet de faire pénétrer correctement les dents 13 du peigne 12 dans la denture 5 de la crémaillère 4 solidaire du profilé inférieur fixe 1 et ce mouvement a pour effet de faire basculer légèrement dans le sens de la flèche F2 la partie avant du verrou 10 (voir fig. 1), ce qui fait que la découpe circulaire 6 du verrou 10 vient porter sur les points 11a, 11b du trou 11 ovale réalisé sur l'aile 3d du profilé supérieur 3 (voir fig. 4) en empêchant ainsi tout jeu du verrou 10 donc tout jeu entre le profilé inférieur fixe 1 et le profilé supérieur mobile 3 de la glissière.

La fabrication des profilés 1 et 3 n'est absolument pas modifiée, le verrou 10 est d'un type classique et les organes prévus pour la fixation de la lame-ressort 19, l'axe de rotation constitué par la découpe 6 du verrou et le trou ovalisé 11 sont d'une technique de fabrication extrêmement simple, puisque pouvant être réalisés automatiquement. Il est à signaler également que la coopération des dents 13 à angle de 90° avec les dentures à angle rabattues 5a, 5b facilite également la suppression de jeux verticaux entre les deux profilés 1 et 3 de chaque glissière.

## Revendications

1. Verrou manuel de glissière de siège à rattrapage de jeu horizontal coopérant avec l'une des ailes verticales du profilé mobile supérieur d'une glissière munie d'une crémaillère pour la mise en action du verrou de blocage présentant des dents (13) d'un peigne (12) qui ont une section carrée pour coopérer avec le profil arrondi (5a, 5b) du fond de la denture (5) de la crémaillère (4), caractérisé en ce que:
a) une découpe circulaire (6) formée par un embouti solidaire de la face latérale d'un verrou (10) sert d'axe de rotation à ce verrou (10) en passant à travers un trou ovalisé (11) réalisé sur l'une (3d) des ailes verticales du profilé supérieur (3) mobile, ce verrou étant guidé à l'avant par un crevé (7) de l'aile de ce même profilé supérieur et présentant à sa partie supérieure une aile triangulaire horizontale (14) percée d'un trou (15) recevant l'une (19a) des extrémités d'un ressort-lame (19) travaillant en flexion tandis que l'autre extrémité repose dans un crevé (8) de la partie arrière de l'aile (3d) du profilé mobile (3) afin que le peigne (12) du verrou (10) pénètre dans une crémaillère (4) portée par l'une des ailes (1a) du profilé fixe (1) de la glissière, le blocage du peigne (12) dans la crémaillère (4) étant assuré par le basculement du verrou (10) autour de la découpe (6) logée dans le trou ovalisé (11) sous l'action du ressort-lame (19),
b) le ressort-lame (19) exerce par son extrémité libre ou pointe (19a) un couple de rotation sur le verrou en s'arc-boutant dans le trou (15) réalisé dans l'aile (14) de ce verrou de manière que la découpe circulaire (6) coopère avec les points (11a, 11b) du trou ovalisé (11), l'autre extrémité du ressort-lame (19) prenant appui dans le crevé arrière (8) réalisé sur la face latérale (3d) du profil supérieur (3).

## Patentansprüche

1. Handbetätigter Gleitschienenriegel für einen Sitz zur Beseitigung horizontalen Spiels, der mit einem der vertikalen Flügel des oberen beweglichen Profilstücks einer Gleitschiene zusammenarbeitet, die mit einer Zahnstange für die Blockierwirkung des Riegels versehen ist, der Zähne (13) eines Kamms (12) aufweist, die einen rechteckigen Abschnitt haben, um mit dem abgerundeten Bodenprofil (5a, 5b) der Verzahnung (5) der Zahnstange (4) zusammenzuarbeiten, dadurch gekennzeichnet, daß:
a) ein kreisförmiger Abschnitt (6), der von einer festen Ausbuchtung der Seitenfläche eines Riegels (10) gebildet wird, diesem Riegel (10) als Drehachse dient, indem er quer ein unrundes Loch (11) passiert, das an einem (3d) der vertikalen Flügel des oberen beweglichen Profilstücks (3) ausgebildet ist, wobei der Riegel vorn durch einen Einschnitt (7) des Flügels eben dieses oberen Profilstücks geführt ist und an seiner oberen Partie einen dreieckigen horizontalen Flügel (14) aufweist, der von einem Loch (15) durchbohrt ist, das das eine (19a) der Enden einer in Biegung arbeitenden Blattfeder (19) aufnimmt, während das andere Ende in einem Einschnitt (8) der hinteren Partie des Flügels (3d) des beweglichen Profilstücks (3) ruht, damit der Kamm (12) des Riegels (10) in eine Zahnstange (4) eindringt, die von einem der Flügel (1a) des festen Profilstücks (1) der Gleitschiene getragen wird, wobei das Blockieren des Kamms (12) in der Zahnstange (4) durch das Kippen des Riegels (10) um den in dem unrunden Loch (11) befindlichen Abschnitt (6) unter der Wirkung der Blattfeder (19) gewährleistet ist,
b) die Blattfeder (19) durch ihr freies Ende oder ihre Spitze (19a) ein Drehmoment auf den Riegel ausübt, indem sie sich als Bogen in dem Loch (15) abstützt, das in dem Flügel (14) des Riegels ausgebildet ist, derart daß der kreisförmige Abschnitt (6) mit den Punkten (11a, 11b) des unrunden Lochs (11) zusammenarbeitet, während das andere Ende der Blattfeder (19) Halt an dem hinteren Einschnitt (8) findet, der auf der seitlichen Fläche (3d) des oberen Profilstücks (3) ausgebildet ist.

## Claims

1. Manually operable locking device for a seat slide, with compensation for horizontal play, cooperating with one of the vertical wings of the upper mobile profile of a slide provided with a rack for activating the locking device having teeth (13) of a comb (12) which have a square section for cooperating with the rounded profile (5a, 5b) of the bottom of the toothing (5) of the rack (4), characterized in that :
a) a circular cut-out portion (6) formed by a boss fixed with the lateral side of a locking device (10) is used as an axis of rotation for this locking device (10) by extending through an ovalized hole (11) formed on one (3d) of the vertical wings of the upper mobile profile (3), this locking device being guided frontwardly by a stamped-out part (7) of the wing of this same upper profile and being provided at its upper portion with a horizontal triangular wing (14) pierced with a hole (15) receiving one (19a) of the ends of a leaf spring (19) working in flexion while the other end bears in a stamped-out part (8) of the rear portion of the wing (3d) of the mobile profile (3) in such a manner that the comb (12) of the locking device (10) extends into a rack (4) carried by one of the wings (1a) of the fixed profile (1) of the slide, the locking of the comb (12) in the rack (4) being provided by the tilting motion of the locking device (10) about the cut-out portion (6) housed in the ovalized hole (11) under action of the leaf-spring (19),
b) the leaf-spring (19) exerts, via its free end or point (19a), a rotation torque on the locking device by bracing itself in the hole (15) formed in the wing (14) of this locking device so that the circular cut-out portion (6) cooperates with the points (11a, 11b) of the ovalized hole (11), the other end of the leaf-spring coming to bear in the rear stamped-out part (8) made on the lateral side (3d) of the upper profile (3).
